(19) Europäisches Patentamt
European Patent Office
Office européen des brevets

(11) EP 3 521 357 A1

(12) **EUROPEAN PATENT APPLICATION**
published in accordance with Art. 153(4) EPC

(43) Date of publication:
**07.08.2019 Bulletin 2019/32**

(21) Application number: **17855729.4**

(22) Date of filing: **13.09.2017**

(51) Int Cl.:
***C08K 5/134*** *(2006.01)* ***C08K 5/11*** *(2006.01)*
***C08K 5/12*** *(2006.01)* ***C08L 101/00*** *(2006.01)*

(86) International application number:
**PCT/JP2017/033051**

(87) International publication number:
**WO 2018/061773 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2016 JP 2016189301**

(71) Applicant: **Adeka Corporation**
**Tokyo 116-0012 (JP)**

(72) Inventors:
- **MURAKAMI Takashi**
**Saitama-shi**
**Saitama 336-0022 (JP)**
- **TADA Atsuo**
**Saitama-shi**
**Saitama 336-0022 (JP)**

(74) Representative: **Gill Jennings & Every LLP**
**The Broadgate Tower**
**20 Primrose Street**
**London EC2A 2ES (GB)**

(54) **MODIFIER FOR RESIN, AND RESIN COMPOSITION USING SAME**

(57) Provided are a resin modifier capable of imparting resins with excellent bleeding resistance, moisture resistance, dimensional stability and optical properties, and a resin composition containing the same. The resin modifier contains: a diester compound represented by Formula (1) below, where $G_1$ represents a diol residue having 2 to 9 carbon atoms; and an oligoester compound represented by Formula (2) below, where $G_2$ and $G_3$ independently represent a diol residue having 2 to 8 carbon atoms; A represents an aromatic dibasic acid residue or an aliphatic dibasic acid residue having 4 to 10 carbon atoms; R represents an aromatic monocarboxylic acid residue; and n represents an integer of 1 or larger. The diester compound amount is 15% by mass or more to a total of the diester and oligoester compounds, and an oligoester compound amount where n = 1 is 15% by mass or more in the whole oligoester compound:

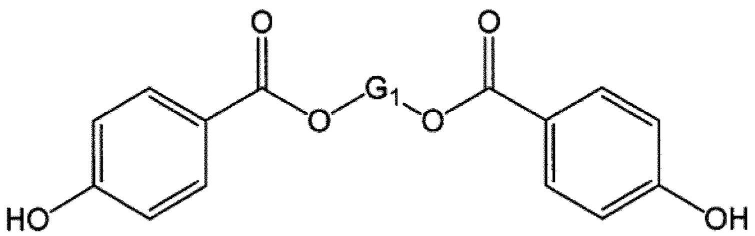

(1)

,

and

$$R\left(G_2-A\right)_n G_3-R \qquad (2)$$

EP 3 521 357 A1

## Description

TECHNICAL FIELD

The present invention relates to a resin modifier (hereinafter, also simply referred to as "modifier"), and a resin composition containing the same. More particularly, the present invention relates to: a resin modifier which can impart a resin with excellent bleeding resistance, moisture resistance, dimensional stability, and optical properties; and a resin composition containing the same.

BACKGROUND ART

In recently years, resin films, such as cellulose acylate films, polycarbonate films, polyacrylate films and polyolefin films, have been used mainly as polarizing plate protective films and optical compensation films for liquid crystal display devices. Thereamong, cellulose acylate films have been widely used because of their excellent adhesiveness to polyvinyl alcohols used in polarizers as well as high transparency and appropriate strength.

However, cellulose acylate films have a high moisture permeability and thus have a drawback in that permeation of external moisture therethrough causes detachment from a polarizer and deterioration of the polarizer itself. Further, under high-temperature and high-humidity conditions, there are also problems in contraction of polarizing plate protective films and optical compensation films caused by moisture absorption (dimensional stability) and phase difference variation associated with the visibility (optical property). In recent years, polarizing plate protective films and optical compensation films are further reduced in thickness in association with thickness reduction of liquid crystal display devices, and superior moisture resistance, dimensional stability and optical properties are demanded.

With regard to these problems, Patent Document 1 proposes an additive for cellulose ester resins which contains an aromatic ring-free polyester composed of a dihydric alcohol and a dibasic acid and imparts a high retardation value to cellulose ester resin-made films. Moreover, Patent Document 2 proposes an additive for cellulose ester resins which contains an ester compound that exhibits excellent bleeding resistance under high-temperature and high-humidity conditions and is unlikely to be vaporized in the production process.

RELATED ART DOCUMENTS

PATENT DOCUMENTS

[Patent Document 1] WO 2007/000910
[Patent Document 2] JP2010-248493A

SUMMARY OF THE INVENTION

PROBLEMS TO BE SOLVED BY THE INVENTION

However, in Patent Document 1, although it is disclosed that the moisture permeability is desired to be low, no concrete examination is made with regard to an improvement. Further, in Patent Document 2, the dimensional stability is not examined, and the performance relating to the moisture permeability is still not sufficient and satisfactory. In view of these, a modifier which is satisfactory in all of moisture resistance, dimensional stability and optical properties has not been discovered until now.

Therefore, an object of the present invention is to provide: a resin modifier which can impart a resin with excellent bleeding resistance, moisture resistance, dimensional stability, and optical properties; and a resin composition containing the same.

MEANS FOR SOLVING THE PROBLEMS

The present inventors intensively studied to solve the above-described problems and consequently discovered that the problems can be solved by using a compound having the following structure as a resin modifier, thereby completing the present invention.

That is, the resin modifier of the present invention is a resin modifier containing:
a diester compound represented by the following Formula (1):

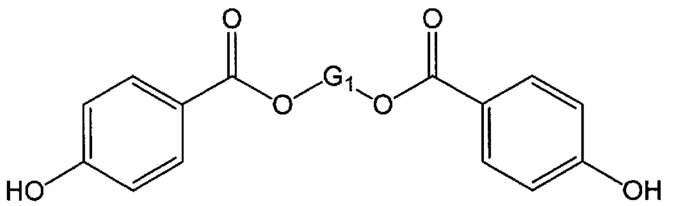

(1)

,

where $G_1$ represents a diol residue having 2 to 9 carbon atoms; and an oligoester compound represented by the following Formula (2):

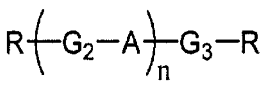

(2)

,

where $G_2$ and $G_3$ each independently represent a diol residue having 2 to 8 carbon atoms; A represents an aromatic dibasic acid residue or an aliphatic dibasic acid residue having 4 to 10 carbon atoms; R represents an aromatic monocarboxylic acid residue; and n represents an integer of 1 or larger,

the resin modifier being characterized in that the diester compound is contained in an amount of not less than 15% by mass with respect to a total amount of the diester compound and the oligoester compound, and an oligoester compound where n = 1 is contained in an amount of not less than 15% by mass with respect to a total amount of the oligoester compound.

In the resin modifier of the present invention, it is preferred that not less than 50% by mole of the A in the Formula (2) be at least one residue selected from the group consisting of terephthalic acid, phthalic acid, succinic acid and adipic acid, and it is more preferred that the A in the Formula (2) be at least one residue selected from the group consisting of terephthalic acid, phthalic acid, succinic acid and adipic acid. Further, in the resin modifier of the present invention, it is preferred that the R in the Formula (2) be a *p*-hydroxybenzoic acid residue. Still further, the resin modifier of the present invention is suitable for a thermoplastic resin, particularly a cellulose-based resin.

The resin composition of the present invention is characterized by containing the resin modifier of the present invention.

## EFFECTS OF THE INVENTION

According to the present invention, a resin modifier which can impart a resin with excellent bleeding resistance, moisture resistance, dimensional stability and optical properties, and a resin composition containing the same can be provided.

## MODE FOR CARRYING OUT THE INVENTION

Embodiments of the present invention will now be described in detail.

The resin modifier of the present invention is a resin modifier containing a diester compound represented by the following Formula (1) and an oligoester compound represented by the following Formula (2):

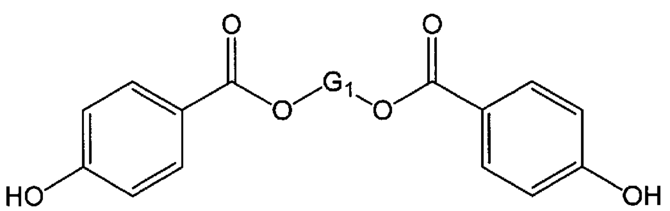

(1)

,

and

$$R\left(-G_2-A-\right)_n G_3-R \qquad (2)$$

In the Formula (1), $G_1$ represents a diol residue having 2 to 9 carbon atoms. In the Formula (2), $G_2$ and $G_3$ each independently represent a diol residue having 2 to 8 carbon atoms; A represents an aromatic dibasic acid residue or an aliphatic dibasic acid residue having 4 to 10 carbon atoms; R represents an aromatic monocarboxylic acid residue; and n represents an integer of 1 or larger.

Examples of a diol yielding the diol residue having 2 to 9 carbon atoms that is represented by the $G_1$ in the Formula (1) include aliphatic diols and aromatic group-containing diols. Two or more of these diols may be used as a mixture. Examples of the aliphatic diols include 1,2-ethanediol (ethylene glycol), 1,2-propanediol (propylene glycol), 1,3-propanediol, 1,2-butane diol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-*n*-butyl-2-ethyl-1,3-propanediol (3,3-dimethylol heptane), 3-methyl-1,5-pentanediol, 1,6-hexanediol, 2,2,4-trimethyl-1,3-pentanediol, 2-ethyl-1,3-hexanediol, 2-methyl-1,8-octanediol, 1,9-nonanediol, 1,4-cyclohexane dimethanol, 1,2-, 1,3- or 1,4-cyclohexanediol, dimer diol, hydrogenated dimer diol, diethylene glycol, dipropylene glycol, triethylene glycol, and polyethylene glycol. Examples of the aromatic group-containing diols include 1,2-hydroxybenzene, 1,3-hydroxybenzene, 1,4-hydroxybenzene, 1,4-benzenedimethanol, resorcin, and pyrocatechol.

A method of producing the diester compound represented by the Formula (1) is not particularly restricted, and the compound represented by the Formula (1) can be obtained by, for example, adding a diol component (e.g., ethylene glycol or propylene glycol) and *p*-hydroxybenzoic acid all together at once or in portions in the presence or absence of a catalyst, allowing these materials to undergo an esterification reaction or a transesterification reaction, and subsequently performing a post-treatment of the resultant in accordance with a conventional method.

Examples of a diol yielding the diol residue having 2 to 8 carbon atoms that is represented by the $G_2$ and $G_3$ in the Formula (2) include aliphatic diols and aromatic group-containing diols. Two or more of these diols may be used as a mixture. Examples of the aliphatic diols include 1,2-ethanediol (ethylene glycol), 1,2-propanediol (propylene glycol), 1,3-propanediol, 1,2-butane diol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-*n*-butyl-2-ethyl-1,3-propanediol (3,3-dimethylol heptane), 3-methyl-1,5-pentanediol, 1,6-hexanediol, 2,2,4-trimethyl-1,3-pentanediol, 2-ethyl-1,3-hexanediol, 2-methyl-1,8-octanediol, 1,4-cyclohexane dimethanol, 1,2-, 1,3- or 1,4-cyclohexanediol, dimer diol, hydrogenated dimer diol, diethylene glycol, dipropylene glycol, triethylene glycol, and polyethylene glycol. Examples of the aromatic group-containing diols include 1,2-hydroxybenzene, 1,3-hydroxybenzene, 1,4-hydroxybenzene, 1,4-benzenedimethanol, resorcin, and pyrocatechol.

As an aromatic dibasic acid yielding the aromatic dibasic acid residue represented by the A in the Formula (2), for example, terephthalic acid, phthalic acid, isophthalic acid, naphthalene dicarboxylic acid, diphenylsulfone dicarboxylic acid, diphenyl ether dicarboxylic acid, diphenyl ketone dicarboxylic acid, phenylindane dicarboxylic acid, sodium sulfoisophthalic acid, or dibromoterephthalic acid can be used. Thereamong, terephthalic acid, phthalic acid, and isophthalic acid are preferred. These aromatic dibasic acids may be used individually, or two or more thereof may be used in combination.

As an aliphatic dibasic acid yielding the aliphatic dibasic acid residue having 4 to 10 carbon atoms that is represented by the A in the Formula (2), for example, succinic acid, glutaric acid, adipic acid, pimelic acid, azelaic acid, sebacic acid, fumaric acid, 2,2-dimethylglutaric acid, suberic acid, 1,3-cyclopentane dicarboxylic acid, 1,4-cyclohexane dicarboxylic acid, 1,3-cyclohexane dicarboxylic acid, diglycolic acid, itaconic acid, or maleic acid can be used. Thereamong, succinic acid and adipic acid are preferred. These aliphatic dibasic acids may be used individually, or two or more thereof may be used in combination.

In the resin modifier of the present invention, it is preferred that not less than 50% by mole of the A in the Formula (2) be at least one residue selected from the group consisting of terephthalic acid, phthalic acid, succinic acid and adipic acid, and it is more preferred that the A in the Formula (2) be at least one residue selected from the group consisting of terephthalic acid, phthalic acid, succinic acid and adipic acid.

As an aromatic monocarboxylic acid yielding the aromatic monocarboxylic acid residue represented by the R in the Formula (2), an aromatic carboxylic acid such as benzoic acid, *p*-hydroxybenzoic acid, *p*-methylbenzoic acid, *m*-methylbenzoic acid, dimethylbenzoic acid, *p*-*tert*-butylbenzoic acid, *p*-methoxybenzoic acid, *p*-chlorobenzoic acid, naphthoic acid, or biphenylcarboxylic acid can be used. These aromatic carboxylic acids may be used individually, or two or more thereof may be used in combination. Thereamong, *p*-hydroxybenzoic acid is preferred from the standpoints of phase difference variation and moisture permeability.

A method of producing the oligoester compound represented by the Formula (2) is not particularly restricted, and the compound represented by the Formula (2) can be obtained by, for example, adding an aromatic dibasic acid(s) (e.g., succinic acid and/or terephthalic acid) and an anhydride(s) and an acid chloride(s) of such acid component(s)

along with a diol component (e.g., ethylene glycol or propylene glycol) and an aromatic monocarboxylic acid (e.g., *p*-hydroxybenzoic acid) all together at once or in portions in the presence or absence of a catalyst, allowing these materials to undergo an esterification reaction or a transesterification reaction, and subsequently performing a post-treatment of the resultant in accordance with a conventional method.

Further, in the modifier of the present invention, the ratio of the diester compound represented by the Formula (1) is not less than 15% by mass with respect to a total amount of the diester compound represented by the Formula (1) and the oligoester compound represented by the Formula (2). By adopting this constitution, excellent bleeding resistance, moisture resistance, dimensional stability and optical properties can be attained. The ratio of the diester compound represented by the Formula (1) is preferably 15 to 80% by mass, more preferably 20 to 80% by mass, particularly preferably 30 to 80% by mass.

Still further, in the modifier of the present invention, the value of the n in the Formula (2) is an integer of 1 or larger, and the oligoester compound represented by the Formula (2) may be a mixture of compounds having a molecular weight distribution or a single product obtained by purification of such compounds through distillation or the like; however, from the economic standpoint, the oligoester compound represented by the Formula (2) is preferably a mixture of compounds having a molecular weight distribution. When the oligoester compound is a mixture of compounds having a molecular weight distribution, the modifier has excellent moisture permeability and optical properties (phase difference variation) and, from the standpoints of the compatibility with a resin and the moisture resistance, the number-average molecular weight is preferably 500 to 2,000, more preferably 550 to 1,600, still more preferably 600 to 1,300. It is noted here that the number-average molecular weight is measured by gel permeation chromatography (GPC) in terms of polystyrene.

Yet still further, in the modifier of the present invention, an oligoester compound where n = 1 is contained in an amount of not less than 15% by mass with respect to a total amount of the oligoester compound. By satisfying this requirement, the modifier of the present invention can impart a resin with excellent bleeding resistance, moisture resistance, dimensional stability, and optical properties. The amount of the oligoester compound where n = 1 is preferably 15 to 85% by mass, more preferably 20 to 85% by mass, particularly preferably 30 to 85% by mass.

The amount of the resin modifier of the present invention to be added is not particularly restricted; however, it is preferably 0.1 to 100 parts by mass, more preferably 0.5 to 80 parts by mass, still more preferably 1 to 50 parts by mass, particularly preferably 1 to 30 parts by mass, with respect to 100 parts by mass of a resin. When the amount of the resin modifier of the present invention is less than 0.1 parts by mass, the performances such as moisture resistance, dimensional stability and optical properties (phase difference variation) may not be sufficiently exerted in some cases, whereas when the amount is greater than 100 parts by mass, bleeding of the resin modifier may occur.

Next, the resin composition of the present invention will be described. The resin composition of the present invention contains the resin modifier of the present invention and has excellent bleeding resistance, moisture resistance, dimensional stability and optical properties. The resin used in the resin composition of the present invention is not particularly restricted. Examples of the resin include thermoplastic resins and thermosetting resins, and a thermoplastic resin can be preferably used.

Examples of the thermoplastic resins include polyvinyl chloride resins, polyethylene resins, polypropylene resins, polystyrene resins, polyvinyl acetate resins, polyurethane resins, cellulose-based resins, acrylic resins, AS (acrylonitrile-styrene) resins, ABS (acrylonitrile-butadiene-styrene) resins, fluorocarbon resins, thermoplastic elastomers, polyamide resins, polyacetal resins, polycarbonate resins, modified polyphenylene ether resins, polyethylene terephthalate resins, polybutylene terephthalate resins, polylactic acid-based resins, cyclic polyolefin resins and polyphenylene sulfide resin, and these resins may be used individually, or two or more thereof may be used in combination.

Examples of the polyvinyl chloride resins include homopolymers, such as polyvinyl chloride and polyvinylidene chloride; and vinyl compound copolymers, such as copolymers of vinyl chloride or vinylidene chloride and vinyl acetate. These polyvinyl chloride resins may be used individually, or two or more thereof may be used in combination.

Examples of the polyethylene resins include low-density polyethylenes, medium-density polyethylenes, and high-density polyethylenes. These polyethylene resins may be used individually, or two or more thereof may be used in combination.

The polypropylene resins are not particularly restricted in terms of polymerization method, and examples of the polypropylene resins include homopolymers, random polymers, and block polymers. Such polypropylene resins may be used individually, or two or more thereof may be used in combination.

Examples of the cellulose-based resins include cellophane, celluloid, cellulose acetate, cellulose diacetate, cellulose triacetate, cellulose propionate, cellulose acetate propionate, cellulose acetate butyrate, methyl acetate, ethyl cellulose, carboxymethyl cellulose, hydroxyethyl cellulose, hydroxypropyl cellulose, ethylhydroxyethyl cellulose, and carboxymethylethyl cellulose. These cellulose-based resins may be used individually, or two or more thereof may be used in combination.

Examples of the acrylic resins include methyl polyacrylate and methyl polymethacrylate. These acrylic resins may be used individually, or two or more thereof may be used in combination.

Examples of the polyamide resins include aliphatic polyamides, such as nylon-6, nylon-66, nylon-10, nylon-12 and nylon-46; and aromatic polyamides produced from an aromatic dicarboxylic acid and an aliphatic diamine. These polyamide resins may be used individually, or two or more thereof may be used in combination.

Examples of the polyacetal resins include polyformaldehyde, polyacetaldehyde, polypropionaldehyde, and polybutylaldehyde. These polyacetal resins may be used individually, or two or more thereof may be used in combination.

Among the above-described resins, the resin used in the resin composition of the present invention is more preferably a cellulose-based resin, still more preferably a lower fatty acid ester of cellulose. The "lower fatty acid" in the lower fatty acid ester of cellulose means a fatty acid having 6 or less carbon atoms. Examples of such a lower fatty acid ester of cellulose include cellulose acetate, cellulose propionate and cellulose butyrate, as well as mixed fatty acid esters such as cellulose acetate propionate and cellulose acetate butyrate that are described in, for example, JPH10-45804A, JPH08-231761A and U.S. Patent No. 2,319,052 (Specification).

In the resin composition of the present invention, in addition to the resin modifier of the present invention, plasticizers and various additives, such as phenolic or sulfur-based antioxidants, ultraviolet absorbers, hindered amine-based light stabilizers, polyols and other inorganic compounds, may also be incorporated. These plasticizers and various additives may be used individually, or two or more thereof may be used in combination.

Examples of the plasticizers include phthalate-based plasticizers, such as dibutyl phthalate, butylhexyl phthalate, diheptyl phthalate, di(2-ethylhexyl)phthalate, diisononyl phthalate, diisodecyl phthalate, dilauryl phthalate, dicyclohexyl phthalate, and dioctyl terephthalate; adipate-based plasticizers, such as dioctyl adipate, diisononyl adipate, diisodecyl adipate, and di(butyl diglycol)adipate; phosphate-based plasticizers, such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate, and octyldiphenyl phosphate; polyester-based plasticizers other than the present invention, in which ethylene glycol, diethylene glycol, triethylene glycol, 1,3-butanediol, 1,4-butanediol, 1,5-pentanediol, 1,6-hexanediol, neopentyl glycol, trimethylolpropane or the like is used as a polyhydric alcohol, and oxalic acid, malonic acid, succinic acid, glutaric acid, adipic acid, pimelic acid, suberic acid, azelaic acid, sebacic acid, phthalic acid, isophthalic acid, terephthalic acid, cinnamic acid or the like is used as a dibasic acid along with, as required, a monohydric alcohol, a monocarboxylic acid (e.g., acetic acid or an aromatic acid) or the like is used as a stopper; epoxy-based plasticizers, such as epoxidized soybean oil, epoxidized linseed oil, epoxidized tung oil, epoxidized fish oil, epoxidized beef tallow oil, epoxidized castor oil, epoxidized safflower oil, epoxidized methyl stearate, epoxidized butyl stearate, epoxidized 2-ethylhexyl stearate, epoxidized stearyl stearate, epoxidized polybutadiene, tris(epoxypropyl)isocyanurate, epoxidized tall oil fatty acid esters, epoxidized linseed oil fatty acid esters, bisphenol A diglycidyl ether, vinylcyclohexene diepoxide, dicyclohexene diepoxide and 3,4-epoxycyclohexylmethyl epoxycyclohexanecarboxylate; tetrahydrophthalic acid-based plasticizers; azelaic acid-based plasticizers; sebacic acid-based plasticizers, such as di-2-ethylhexyl sebacate (DOS) and dibutyl sebacate (DBS); stearic acid-based plasticizers; citric acid-based plasticizers; pyromellitic acid-based plasticizers; biphenylene polycarboxylic acid-based plasticizers; and polyhydric alcohol aromatic acid ester-based plasticizers (e.g., trimethylolpropane tribenzoate), among which, for example, polyester-based plasticizers other than the present invention, phthalate-based plasticizers, trimellitate-based plasticizers, adipate-based plasticizers, sebacic acid-based plasticizers and epoxy-based plasticizers are preferred.

Examples of specific compounds of the polyester-based plasticizers other than the resin modifier of the present invention include, but not limited to, the following Plasticizers 1 to 13, and these compounds may be used individually, or two or more thereof may be used as a mixture.

The numbers in parentheses of the following Plasticizers 1 to 4 each indicate a molar ratio, and these polyester-based plasticizers may be used individually, or two or more thereof may be used as a mixture.

Plasticizer-1: a compound represented by the following Formula (3):

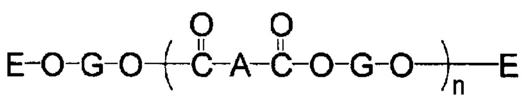 (3)

,

where a polyhydric alcohol component G consists of ethylene glycol (50) and 1,2-propylene glycol (50); a polycarboxylic acid component A consists of succinic acid (50) and terephthalic acid (50); terminals E are acetyl groups; and n = 5.
Plasticizer-2: a compound represented by the Formula (3), where the polyhydric alcohol component G is 1,2-propylene glycol; the polycarboxylic acid component A is 2,6-naphthalenedicarboxylic acid; the terminals E are hydrogen atoms; and n = 2. Plasticizer-3: a compound represented by the Formula (3), where the polyhydric alcohol component G is ethylene glycol; the polycarboxylic acid component A is adipic acid; the terminals E are acetyl groups; and n = 10.

Plasticizer-4: a compound represented by the Formula (3), where the polyhydric alcohol component G is 1,2-propylene glycol; the polycarboxylic acid component A is terephthalic acid; the terminals E are toluyl groups; and n = 5.

Plasticizer-5: a compound represented by the following Formula (4):

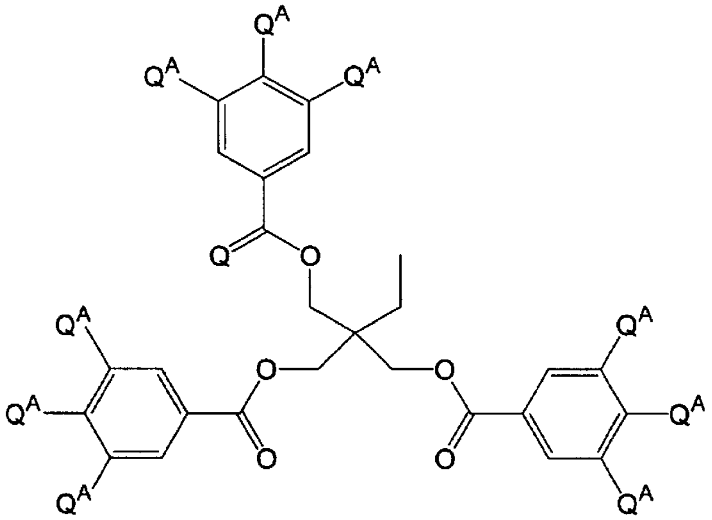

(4)

,

where all of substituents $Q^A$ are hydrogen atoms.
Plasticizer-6: a compound represented by the following Formula (4), where all of the substituents $Q^A$ are methoxy groups.

Plasticizer-7:

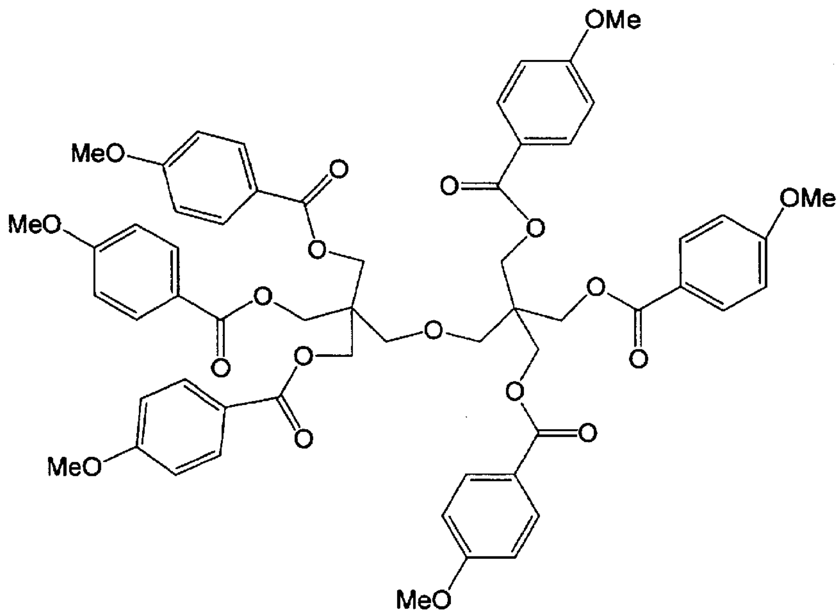

Plasticizer-8:

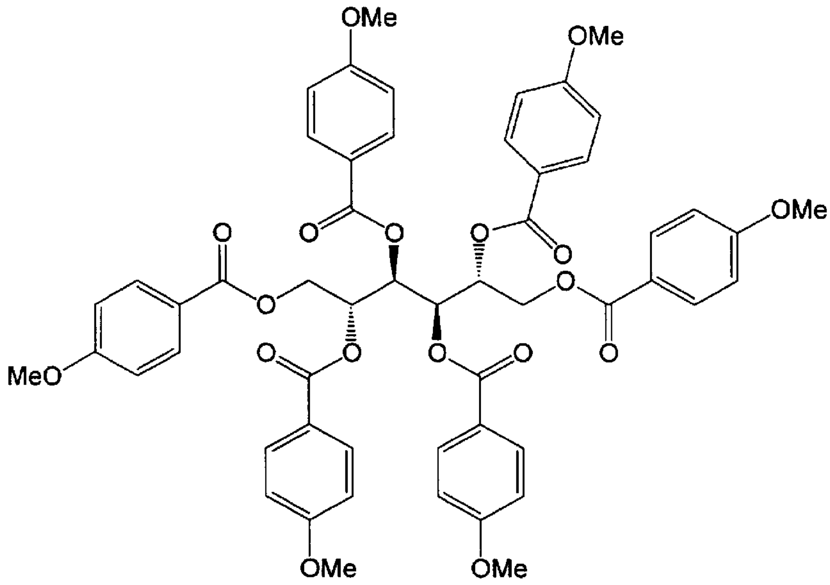

Plasticizer-9:

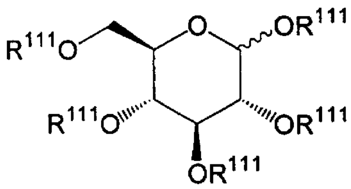

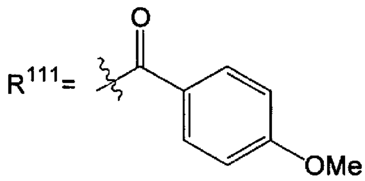

Plasticizer-10:

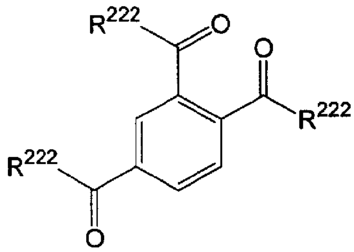

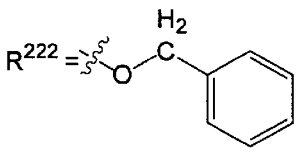

Plasticizer-11:

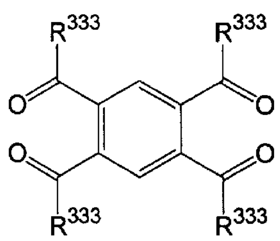

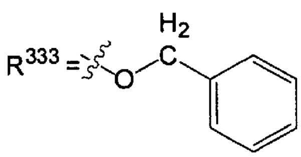

Plasticizer-12:

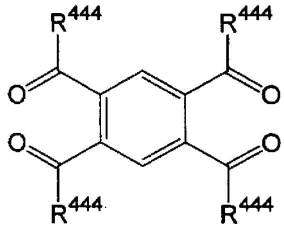

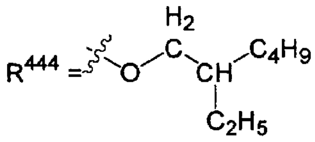

Plasticizer-13:

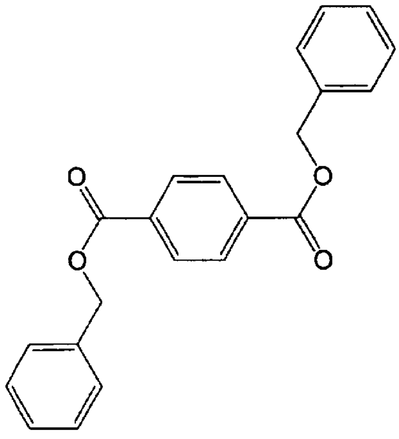

These plasticizers can be incorporated in any amount within a range that does not impair the effects of the present invention; however, the amount is preferably 1 to 90 parts by mass, more preferably 10 to 80 parts by mass, with respect to 100 parts by mass of the resin.

Examples of the phenolic antioxidants include 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(4,6-di-*tert*-butylphenol), 2,2'-ethylidene-bis(4,6-di-*tert*-butylphenol), 1, 1, 3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3,5-di-*tert*-butyl-4-hydroxyphenyl)propionate]methane, 2-*tert*-butyl-4-methyl-6-(2-acryloyloxy-3-*tert*-butyl-5-methylbenzyl)phenol, 3,9-bis[2-{3-(3-*tert*-butyl-4-hydroxy-5-methylphenyl)propanoyloxy}-1,1-dimethylethyl]-2,4, 8,10-tetraoxaspiro[5.5]undecane, and triethylene glycol-bis[β-(3-*tert*-butyl-4-hydroxy-5-methylphenyl)propionate]. These phenolic antioxidants can be incorporated in any amount within a range that does not impair the effects of the present invention; however, the amount is preferably 0.01 to 1 part by mass, more preferably 0.03 to 0.8 parts by mass, with respect to 100 parts by mass of the resin.

Examples of the sulfur-based antioxidants include dialkyl thiodipropionates, such as dilauryl thiodipropionate, dimyristyl thiodipropionate, myristylstearyl thiodipropionate and distearyl thiodipropionate; and *β*-alkylmercaptopropionates of polyols, such as pentaerythritol-tetra(*β*-dodecylmercaptopropionate). These sulfur-based antioxidants can be incorporated in any amount within a range that does not impair the effects of the present invention; however, the amount is preferably 0.01 to 1 part by mass, more preferably 0.03 to 0.8 parts by mass, with respect to 100 parts by mass of the resin.

Examples of the ultraviolet absorbers include 2-hydroxybenzophenones, such as 2,4-dihydroxybenzophenone, 2-hydroxy-4-methoxybenzophenone, 2- hydroxy-4-octoxybenzophenone, 2-hydroxy-4-*tert*-butyl-4'-(2-methacryloyloxyethoxyethoxy)benzophenone, and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3-dodecyl-5-methylphenyl)benzotriazole, 2-(2-hydroxy-3-*tert*-butyl-5-C7 to C9 mixed alkoxy-carbonylethylphenyl)triazole, 2-(2-hydroxy-3,5-dicumylphenyl)benzotriazole, 2,2'-methylene-bis(4-*tert*-octyl-6-benzotriazolylphenol), and polyethylene glycol esters of 2-(2-hydroxy-3-*tert*-butyl-5-carboxyphenyl)benzotriazole; 2-(2-hydroxyphenyl)-1,3,5-triazines, such as 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2-(2-hydroxy-4-octoxyphenyl)-4,6-bis(2,4-dimethylphenyl)-,3,5-triazine, 2-(2-hydroxy-4-acryloyloxyethoxyphenyl)-4,6-bis(2,4-dimethylphenyl)-1,3,5-triazine, 2-(2-hydroxy-4-(2-(2-ethylhexanoyloxy)ethyloxy)phenyl)-4,6-diphenyl-1,3,5-triazine, 2,4,6-tris(2-hydroxy-4-octyloxyphenyl)-1,3,5-triazine, and 2,4,6-tris(2-hydroxy-3-methyl-4-(2-octanoyloxyethyl)phenyl)-1,3,5-triazine; benzoates, such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate, and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; and cyanoacrylates, such as ethyl-$\alpha$-cyano-,$\beta$,$\beta$-diphenylacrylate, methyl-2-cyano-3-methyl-3-(*p*-methoxyphenyl)acrylate, and tetrakis($\alpha$-cyano-$\beta$,$\beta$-diphenylacryloyloxymethyl)methane. These ultraviolet absorbers can be incorporated in any amount within a range that does not impair the effects of the present invention; however, the amount is preferably 0.01 to 5 parts by mass, more preferably 0.03 to 3 parts by mass, with respect to 100 parts by mass of the resin.

Examples of the hindered amine-based light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·bis(tridecyl)-1,2,3,4-butanetetracarboxylate, bis(1,2,2,6,6-pentamethyl-4-piperidyl)·bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-*s*-triazine polycondensates, 1,6-bis(2,2,6,6-tetramethyl-4-piperidylamino)hexane/2,4-dichloro-6-*tert*-octylamino-*s*-triazin e polycondensates, 1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino-*s*-triazine-6-ylamino]und ecane, 1,6,11-tris[2,4-bis(*N*-butyl-*N*-(1,2,2,6,6-pentamethyl-4-piperidyl)amino-*s*-triazine-6-ylamino] undecane, 3,9-bis[1,1-dimethyl-2-{tris(2,2,6,6-tetramethyl-4-piperidyloxycarbonyl)butylcarbonyloxyet hyl]-2,4,8,10-tetraoxaspiro[5.5]undecane, 3,9-bis[1,1 -dimethyl-2- { tris(1,2,2,6,6-pentamethyl-4-piperidyloxycarbonyl)butylcarbonyloxy }ethyl]-2,4,8,10-tetraoxaspiro[5.5]undecane, and bis(1-undecyloxy-2,2,6,6-tetramethylpiperidine-4-yl)carbonate. These hindered amine-based light stabilizers can be incorporated in any amount within a range that does not impair the effects of the present invention; however, the amount is preferably 0.01 to 1 part by mass, more preferably 0.03 to 0.8 parts by mass, with respect to 100 parts by mass of the resin.

Examples of the polyols include trimethylolpropane, ditrimethylolpropane, pentaerythritol, dipentaerythritol, polypentaerythritol, stearic acid half esters of pentaerythritol or dipentaerythritol, bis(dipentaerythritol)adipate, glycerin, tris(2-hydroxyethyl)isocyanurate, sorbitol, mannitol, and lactitol. These polyols can be incorporated in any amount within a range that does not impair the effects of the present invention; however, the amount is preferably 0.01 to 2 parts by mass, more preferably 0.01 to 1 part by mass, with respect to 100 parts by mass of the resin.

Examples of other inorganic compounds include calcium silicate, calcium phosphate, calcium oxide, calcium hydroxide, magnesium silicate, magnesium phosphate, magnesium oxide, and magnesium hydroxide. These other inorganic compounds can be incorporated in any amount within a range that does not impair the effects of the present invention; however, the amount is preferably 0.01 to 5 parts by mass, more preferably 0.03 to 3 parts by mass, with respect to 100 parts by mass of the resin.

In addition to the above, in the resin composition of the present invention, as required, other additives such as a filler, a coloring agent, a cross-linking agent, an antistatic agent, an anti-fogging agent, a plate-out inhibitor, a surface treatment agent, a lubricant, a flame retardant, a fluorescent agent, an antifungal agent, an antibacterial agent, a metal inactivator, a mold-releasing agent, a pigment, a processing aid, a foaming agent, an organic acid metal salt, a hydrotalcite compound, a zinc-modified hydrotalcite and a zeolite compound may also be incorporated in such a range that does not impair the effects of the present invention.

The resin composition of the present invention is characterized by containing the resin modifiers represented by the Formulae (1) and (2), and the blending method and molding method thereof are not particularly restricted. Examples of the blending method include a mixing method using an ordinary blender, mixer or the like, a melt-kneading method using an extruder and a method of mixing the materials along with a solvent and flow-casting the resulting solution, and

examples of the molding method include extrusion molding, injection molding, stretch film molding and blow molding.

The shape of a molded article obtained by molding the resin composition of the present invention is not particularly restricted, and examples of the molded article include sheets, films and special-form articles.

The use of the thus obtained molded article is not particularly restricted, and examples thereof include food containers, electronic components, automobile parts, medical materials, film/sheet materials, fiber materials, optical materials, resins for paints, resins for inks, resins for toners, and resins for adhesives.

EXAMPLES

The present invention will now be described in more detail by way of Examples thereof. The present invention, however, is not restricted to the following Examples by any means.

<Examples 1 to 15 and Comparative Examples 1 to 9>

Using the compounds shown in Tables 1 to 6 below, the respective diester compounds and oligoester compounds were synthesized, and resin modifiers were prepared using the thus obtained diester compounds and oligoester compounds. The resin modifiers were each evaluated for the bleeding resistance, moisture resistance (moisture permeability), optical property (phase difference variation) and dimensional stability in accordance with the below-described procedures. The number-average molecular weight was measured by the following procedure. In Tables 1 to 6, the numerical values in parentheses are in % by mole.

<Number-Average Molecular Weight>

The resin modifiers of Examples and Comparative Examples were each dissolved in tetrahydrofuran (THF) to prepare 0.5%-by-mass sample solutions, and the number-average molecular weight was measured by gel permeation chromatography (GPC) under the following conditions. A calibration curve was prepared using polystyrene (molecular weight standards manufactured by GL Sciences Inc.: molecular weight = 162, 370, 580, 1,000, 2,000, 3,000 and 5,000). As the column, SHODEX KF-802 manufactured by Showa Denko K.K. was used. The column temperature was set at 40°C, and the measurement was carried out using THF as an eluent at a flow rate of 1 ml/min and a refractive index (RI) meter as a detector. The thus obtained evaluation results are also shown in Tables 1 to 6 below.

<Bleeding Resistance>

In a mixed solvent composed of 900 parts by mass of methylene chloride and 100 parts by mass of methyl alcohol, 90 parts by mass of cellulose triacetate (acetylation degree = 61%, polymerization degree = 260) and 10 parts by mass of each resin modifier were uniformly dissolved with stirring, whereby various dope solutions for evaluation and film formation were prepared. Then, the thus obtained dope solutions were each flow-casted on a glass plate at a thickness of about 80 μm and subsequently dried at room temperature for 16 hours, at 50°C for 1 hour and then at 120°C for 1 hour to obtain various evaluation films. The thus obtained films all had a thickness of about 80 μm. These films were each left to stand for one week in an environment of 40°C and 80% relative humidity and then visually observed to make a three-scale evaluation based on the following criteria.

○: No bleeding was observed.

Δ: Slight bleeding was observed.

×: A large amount of bleeding was observed.

As for the bleeding resistance, evaluations of "o" and "Δ" indicate excellent performance. The thus obtained evaluation results are also shown in Tables 1 to 6 below.

<Moisture Resistance (Moisture Permeability)>

In a mixed solvent composed of 900 parts by mass of methylene chloride and 100 parts by mass of methyl alcohol, 90 parts by mass of cellulose triacetate (acetylation degree = 61%, polymerization degree = 260) and 10 parts by mass of each modifier were uniformly dissolved with stirring, whereby various dope solutions for evaluation and film formation were prepared. Then, the thus obtained dope solutions were each flow-casted on a glass plate at a thickness of about 80 μm and dried at room temperature for 16 hours, followed by 1-hour drying at 50°C and 1-hour drying at 120°C, whereby various evaluation films were obtained. The thus obtained films all had a thickness of about 80 μm. For these films, the moisture permeability was measured in accordance with the method described in JIS Z 0208 under the conditions of 40°C and 80% relative humidity. A smaller moisture permeability value represents superior moisture resistance. As the moisture resistance, a moisture permeability of 360 g/m2/day or less indicates excellent performance.

The thus obtained evaluation results are also shown in Tables 1 to 6 below.

<Optical Properties (Phase Difference Variation)>

In a mixed solvent composed of 900 parts by mass of methylene chloride and 100 parts by mass of methyl alcohol, 90 parts by mass of cellulose triacetate (acetylation degree = 61%, polymerization degree = 260) and 10 parts by mass of each modifier were uniformly dissolved with stirring, whereby various dope solutions for evaluation and film formation were prepared. Then, the thus obtained dope solutions were each flow-casted on a glass plate at a thickness of about 80 μm and dried at room temperature for 16 hours, followed by 1-hour drying at 50°C and 1-hour drying at 120°C, whereby various evaluation films were obtained. The thus obtained films all had a thickness of about 80 μm. These films were each dried for 48 hours in an environment of 25°C and 15% relative humidity, and the post-drying phase difference in the film thickness direction was measured as "phase difference in dry state". Subsequently, the same film was left to stand for 72 hours at 40°C and 80% relative humidity, and the phase difference in the film thickness direction was measured as "phase difference in high-temperature and high-humidity state". The value of "phase difference variation" was calculated using the following equation and indicated as an absolute value:

$$|\text{Phase difference variation}| = \text{Phase difference in dry state} - \text{Phase difference in high-temperature and high-humidity state.}$$

A smaller phase difference variation means superior performance, and a phase difference variation of 30 or less indicates excellent performance. The thus obtained evaluation results are also shown in Tables 1 to 6 below.

<Dimensional Stability>

In a mixed solvent composed of 900 parts by mass of methylene chloride and 100 parts by mass of methyl alcohol, 90 parts by mass of cellulose triacetate (acetylation degree = 61%, polymerization degree = 260) and 10 parts by mass of each modifier were uniformly dissolved with stirring, whereby various dope solutions for evaluation and film formation were prepared. Then, the thus obtained dope solutions were each flow-casted on a glass plate at a thickness of about 80 μm and dried at room temperature for 16 hours, followed by 1-hour drying at 50°C and 1-hour drying at 120°C, whereby various evaluation films were obtained. The thus obtained films all had a thickness of about 80 μm. These films were each left to stand for 24 hours in an environment of 40°C and 80% relative humidity and then visually observed to make a three-scale evaluation based on the following criteria.

○: No distortion of the film was observed.

Δ: A slight distortion of the film was observed.

×: A large distortion of the film was observed.

As for the dimensional stability, evaluations of "o" and "Δ" indicate excellent performance. The thus obtained evaluation results are also shown in Tables 1 to 6 below.

[Table 1]

<table>
<tr><td colspan="2"></td><td>Example 1</td><td>Example 2</td><td>Example 3</td><td>Example 4</td></tr>
<tr><td rowspan="2">Diester compound</td><td>Diol</td><td>propylene glycol</td><td>ethylene glycol</td><td>diethylene glycol</td><td>1,6-hexane diol</td></tr>
<tr><td>Aromatic monocarboxylic acid</td><td>p-hydroxybenzoic acid</td><td>p-hydroxybenzoic acid</td><td>p-hydroxybenzoic acid</td><td>p-hydroxybenzoic acid</td></tr>
<tr><td rowspan="5">Oligoester compound</td><td>Diol</td><td>propylene glycol</td><td>ethylene glycol</td><td>diethylene glycol</td><td>1,6-hexane diol</td></tr>
<tr><td>Dibasic acid</td><td>succinic acid (50) terephthalic acid (50)</td><td>succinic acid (50) terephthalic acid (50)</td><td>succinic acid (50) terephthalic acid (50)</td><td>succinic acid (50) terephthalic acid (50)</td></tr>
<tr><td>Aromatic monocarboxylic acid</td><td>p-hydroxybenzoic acid</td><td>p-hydroxybenzoic acid</td><td>p-hydroxybenzoic acid</td><td>p-hydroxybenzoic acid</td></tr>
<tr><td>Number-average molecular weight</td><td>970</td><td>920</td><td>1,010</td><td>1,090</td></tr>
<tr><td>Ratio of compound where n = 1 (% by mass)</td><td>28</td><td>30</td><td>39</td><td>46</td></tr>
<tr><td colspan="2">Ratio of diester compound (% by mass)</td><td>22</td><td>25</td><td>35</td><td>31</td></tr>
<tr><td colspan="2">Bleeding resistance</td><td>○</td><td>○</td><td>○</td><td>○</td></tr>
<tr><td colspan="2">Dimensional stability</td><td>○</td><td>○</td><td>○</td><td>○</td></tr>
<tr><td colspan="2">Phase difference variation (ΔRth)</td><td>17</td><td>12</td><td>16</td><td>10</td></tr>
<tr><td colspan="2">Moisture permeability ($g/m^2 \cdot 24h$)</td><td>268</td><td>246</td><td>255</td><td>248</td></tr>
</table>

[Table 2]

| | | Example 5 | Example 6 | Example 7 | Example 8 |
|---|---|---|---|---|---|
| Diester compound | Diol | propylene glycol | propylene glycol | propylene glycol | propylene glycol |
| | Aromatic monocarboxylic acid | *p*-hydroxybenzoic acid | *p*-hydroxybenzoic acid | *p*-hydroxybenzoic acid | *p*-hydroxybenzoic acid |
| Oligoester compound | Diol | propylene glycol | propylene glycol | propylene glycol | propylene glycol |
| | Dibasic acid | adipic acid | succinic acid | terephthalic acid | phthalic acid |
| | Aromatic monocarboxylic acid | *p*-hydroxybenzoic acid | *p*-hydroxybenzoic acid | *p*-hydroxybenzoic acid | *p*-hydroxybenzoic acid |
| | Number-average molecular weight | 1,000 | 980 | 920 | 930 |
| | Ratio of compound where n = 1 (% by mass) | 35 | 31 | 41 | 29 |
| Ratio of diester compound (% by mass) | | 25 | 28 | 20 | 25 |
| Bleeding resistance | | ○ | ○ | ○ | ○ |
| Dimensional stability | | ○ | ○ | ○ | ○ |
| Phase difference variation (ΔRth) | | 20 | 17 | 22 | 20 |
| Moisture permeability ($g/m^2 \cdot 24h$) | | 290 | 285 | 299 | 268 |

[Table 3]

| | | Example 9 | Example 10 | Example 11 | Example 12 |
|---|---|---|---|---|---|
| Diester compound | Diol | 1,3-butylene glycol | ethylene glycol (50) propylene glycol (50) | propylene glycol | 1,6-hexane diol |
| | Aromatic monocarboxylic acid | *p*-hydroxybenzoic acid | *p*-hydroxybenzoic acid | *p*-hydroxybenzoic acid | *p*-hydroxybenzoic acid |
| Oligoester compound | Diol | 1,3-butylene glycol | ethylene glycol (50) propylene glycol (50) | propylene glycol | 1,6-hexane diol |
| | Dibasic acid | succinic acid (30) terephthalic acid (70) | succinic acid (50) terephthalic acid (50) | succinic acid (50) terephthalic acid (50) | succinic acid (50) terephthalic acid (50) |
| | Aromatic monocarboxylic acid | *p*-hydroxybenzoic acid | *p*-hydroxybenzoic acid | *p*-hydroxybenzoic acid | *p*-hydroxybenzoic acid |
| | Number-average molecular weight | 990 | 960 | 720 | 800 |
| | Ratio of compound where n = 1 (% by mass) | 35 | 27 | 63 | 85 |
| Ratio of diester compound (% by mass) | | 21 | 21 | 49 | 80 |
| Bleeding resistance | | ○ | ○ | ○ | ○ |
| Dimensional stability | | ○ | ○ | ○ | ○ |
| Phase difference variation ($\Delta$Rth) | | 18 | 15 | 7 | 4 |
| Moisture permeability ($g/m^2 \cdot 24h$) | | 266 | 258 | 238 | 235 |

[Table 4]

| | | Example 13 | Example 14 | Example 15 | Comparative Example 1 |
|---|---|---|---|---|---|
| Diester compound | Diol | ethylene glycol (10) diethylene glycol (90) | ethylene glycol | propylene glycol | propylene glycol |
| | Aromatic monocarboxylic acid | *p*-hydroxybenzoic acid | *p*-hydroxybenzoic acid | *p*-hydroxybenzoic acid | *p*-hydroxybenzoic acid |
| Oligoester compound | Diol | ethylene glycol (10) diethylene glycol (90) | ethylene glycol | propylene glycol | propylene glycol |
| | Dibasic acid | succinic acid (50) terephthalic acid (50) | terephthalic acid | succinic acid (50) terephthalic acid (50) | succinic acid (50) terephthalic acid (50) |
| | Aromatic monocarboxylic acid | *p*-hydroxybenzoic acid | *p*-hydroxybenzoic acid | *p*-hydroxybenzoic acid | *p*-hydroxybenzoic acid |
| | Number-average molecular weight | 680 | 700 | 1,500 | 2,450 |
| | Ratio of compound where n = 1 (% by mass) | 78 | 65 | 19 | 10 |
| Ratio of diester compound (% by mass) | | 67 | 53 | 18 | 9 |
| Bleeding resistance | | ○ | ○ | ○ | × |
| Dimensional stability | | ○ | ○ | ○ | × |
| Phase difference variation (ΔRth) | | 6 | 10 | 22 | not measurable |
| Moisture permeability ($g/m^2\cdot 24h$) | | 277 | 258 | 298 | not measurable |

[Table 5]

| | | Comparative Example 2 | Comparative Example 3 | Comparative Example 4 | Comparative Example 5 |
|---|---|---|---|---|---|
| Diester compound | Diol | propylene glycol | ethylene glycol | propylene glycol | propylene glycol |
| | Aromatic monocarboxylic acid | *p*-hydroxybenzoic acid | *p*-hydroxybenzoic acid | benzoic acid | *p*-toluic acid |
| Oligoester compound | Diol | propylene glycol | ethylene glycol | propylene glycol | propylene glycol |
| | Dibasic acid | succinic acid | terephthalic acid | succinic acid (50) terephthalic acid (50) | succinic acid (50) terephthalic acid (50) |
| | Aromatic monocarboxylic acid | *p*-hydroxybenzoic acid | *p*-hydroxybenzoic acid | benzoic acid | *p*-toluic acid |
| | Number-average molecular weight | 2,200 | 2,300 | 730 | 780 |
| | Ratio of compound where n = 1 (% by mass) | 12 | 9 | 30 | 60 |
| Ratio of diester compound (% by mass) | | 10 | 8 | 28 | 23 |
| Bleeding resistance | | △ | × | ○ | ○ |
| Dimensional stability | | △ | × | △ | △ |
| Phase difference variation (ΔRth) | | 38 | not measurable | 40 | 37 |
| Moisture permeability ($g/m^2 \cdot 24h$) | | 360 | not measurable | 335 | 360 |

[Table 6]

| | | Comparative Example 6 | Comparative Example 7 | Comparative Example 8 | Comparative Example 9 |
|---|---|---|---|---|---|
| Diester compound | Diol | ethylene glycol | - | - | - |
| | Aromatic monocarboxylic acid | *p*-hydroxybenzoic acid | - | - | - |
| Oligoester compound | Diol | - | propylene glycol | - | - |
| | Dibasic acid | - | succinic acid (50) terephthalic acid (50) | - | - |
| | Aromatic monocarboxylic acid | - | - | - | - |
| | Number-average molecular weight | - | 800 | - | - |
| | Ratio of compound where n = 1 (% by mass) | - | 28 | - | - |
| Ratio of diester compound (% by mass) | | - | - | - | - |
| Other modifier | | - | - | - | triphenyl phosphate |
| Bleeding resistance | | × | ○ | - | ○ |
| Dimensional stability | | × | ○ | △ | ○ |
| Phase difference variation (ΔRth) | | not measurable | 41 | 39 | 40 |
| Moisture permeability ($g/m^2 \cdot 24h$) | | not measurable | 410 | 700 | 400 |

As apparent from Tables 1 to 6, it is seen that the modifiers according to the present invention were satisfactory in all of the bleeding resistance, moisture resistance (moisture permeability), dimensional stability and optical property (phase difference variation).

## Claims

**1.** A resin modifier comprising:

a diester compound represented by the following Formula (1):

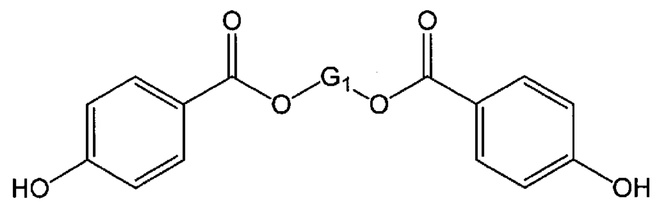

(1)

,

where $G_1$ represents a diol residue having 2 to 9 carbon atoms; and an oligoester compound represented by

the following Formula (2):

$$R \left( G_2 - A \right)_n G_3 - R \qquad (2)$$

,

where $G_2$ and $G_3$ each independently represent a diol residue having 2 to 8 carbon atoms; A represents an aromatic dibasic acid residue or an aliphatic dibasic acid residue having 4 to 10 carbon atoms; R represents an aromatic monocarboxylic acid residue; and n represents an integer of 1 or larger,
wherein the diester compound is contained in an amount of not less than 15% by mass with respect to a total amount of the diester compound and the oligoester compound, and an oligoester compound where n = 1 is contained in an amount of not less than 15% by mass with respect to a total amount of the oligoester compound.

**2.** The resin modifier according to claim 1, wherein not less than 50% by mole of the A in the Formula (2) is at least one residue selected from the group consisting of terephthalic acid, phthalic acid, succinic acid, and adipic acid.

**3.** The resin modifier according to claim 1, wherein the A in the Formula (2) is at least one residue selected from the group consisting of terephthalic acid, phthalic acid, succinic acid, and adipic acid.

**4.** The resin modifier according to claim 1, wherein the R in the Formula (2) is a *p*-hydroxybenzoic acid residue.

**5.** The resin modifier according to any one of claims 1 to 4, which is used for a thermoplastic resin.

**6.** The resin modifier according to claim 5, wherein the thermoplastic resin is a cellulose-based resin.

**7.** A resin composition comprising the resin modifier according to any one of claims 1 to 6.

**INTERNATIONAL SEARCH REPORT**

International application No.
PCT/JP2017/033051

A. CLASSIFICATION OF SUBJECT MATTER
*C08K5/134*(2006.01)i, *C08K5/11*(2006.01)i, *C08K5/12*(2006.01)i, *C08L101/00*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2016/111316 A1 (Konica Minolta, Inc.), 14 July 2016 (14.07.2016), claims; paragraphs [0047], [0051]; example 1 & KR 10-2017-0088974 A | 1-7 |
| A | JP 2015-083646 A (ADEKA Corp.), 30 April 2015 (30.04.2015), the entire specification (Family: none) | 1-7 |
| A | JP 2016-084436 A (Konica Minolta, Inc.), 19 May 2016 (19.05.2016), the entire specification (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 October 2017 (30.10.17) | 07 November 2017 (07.11.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2017/033051

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/115709 A1 (DIC Corp.), 31 July 2014 (31.07.2014), the entire description & US 2015/0368429 A1 the entire specification & KR 10-2015-0109341 A & CN 105008450 A & TW 201434957 A | 1-7 |
| A | JP 2013-234273 A (ADEKA Corp.), 21 November 2013 (21.11.2013), the entire specification & US 2015/0135990 A1 the entire specification & WO 2013/168713 A1 & EP 2848646 A1 & TW 201350535 A & CN 104271656 A & KR 10-2015-0006053 A | 1-7 |
| A | JP 2012-048214 A (Konica Minolta Opto, Inc.), 08 March 2012 (08.03.2012), the entire specification (Family: none) | 1-7 |
| P,A | WO 2016/158790 A1 (ADEKA Corp.), 06 October 2016 (06.10.2016), the entire description & TW 201700571 A | 1-7 |
| P,A | JP 2016-204495 A (DIC Corp.), 08 December 2016 (08.12.2016), the entire specification (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007000910 A
- JP 2010248493 A
- JP H1045804 A
- JP H08231761 A
- US 2319052 A